(19) Europäisches Patentamt / European Patent Office / Office européen des brevets

(11) **EP 2 648 964 B1**

(12) **FASCICULE DE BREVET EUROPEEN**

(45) Date de publication et mention
de la délivrance du brevet:
**12.10.2016 Bulletin 2016/41**

(21) Numéro de dépôt: **11805103.6**

(22) Date de dépôt: **06.12.2011**

(51) Int Cl.:
***B62D 15/02*** *(2006.01)*

(86) Numéro de dépôt international:
**PCT/FR2011/052880**

(87) Numéro de publication internationale:
**WO 2012/076805 (14.06.2012 Gazette 2012/24)**

(54) **PROCÉDÉ DE CONTROLE MIS EN OEUVRE PAR UNE FONCTION DE REGULATION D'UN SYSTÈME DE DIRECTION**

ÜBER EINE LENKSYSTEMREGELUNGSFUNKTION IMPLEMENTIERTES PRÜFVERFAHREN

CHECKING METHOD IMPLEMENTED BY A STEERING SYSTEM REGULATING FUNCTION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.12.2010 FR 1060382**

(43) Date de publication de la demande:
**16.10.2013 Bulletin 2013/42**

(73) Titulaire: **Peugeot Citroën Automobiles SA
78140 Vélizy Villacoublay (FR)**

(72) Inventeur: **CAMPO, Marc
F-92320 Chatillon (FR)**

(74) Mandataire: **Rosenberg, Muriel Sylvie et al
Peugeot Citroën Automobiles SA
Propriété Industrielle - LG 081
18 rue des Fauvelles
92250 La Garenne Colombes (FR)**

(56) Documents cités:
**EP-A2- 1 346 901          EP-A2- 1 864 889
DE-A1-102008 000 941    US-A1- 2002 016 657
US-B1- 6 278 922**

EP 2 648 964 B1

**Description**

La présente invention concerne un procédé de contrôle d'une fonction de contrôle automatique d'un système de direction pour un véhicule automobile, ainsi qu'un système de direction et un véhicule automobile comprenant un tel procédé de contrôle.

Les véhicules automobiles comportent généralement un volant fixé sur une colonne du système de direction, qui est manoeuvré par le conducteur pour braquer les roues directrices de ce véhicule.

Les systèmes de direction comprennent habituellement un dispositif d'assistance qui génère une partie de l'énergie nécessaire pour braquer les roues, de manière à réduire l'effort que doit délivrer le conducteur, en particulier dans les manoeuvres aux basses vitesses et à l'arrêt.

De plus, certains systèmes de direction comportent une motorisation commandée automatiquement par un calculateur de contrôle, qui peut agir sur la colonne de direction et contrôler le braquage des roues directrices pour réaliser certaines fonctions particulières, notamment pour des manoeuvres à basse vitesse de parking (« City Park »), ou des manoeuvres de sécurité comme un évitement d'un obstacle, ou un retour dans la voie normale de circulation en cas de détection d'une sortie ou d'un risque de sortie de cette voie (« PFIL », « LKS », « LKAS »).

La motorisation pour la fonction de contrôle peut comporter en particulier un moteur électrique ou des vérins hydrauliques du dispositif d'assistance, pour générer l'effort qui entraîne la rotation de la colonne de direction et le braquage des roues correspondant. Le calculateur de contrôle recevant des informations de capteurs, notamment d'un capteur d'angle volant, met en oeuvre un procédé de contrôle de cette motorisation, pour réaliser un asservissement de la position de la colonne de direction demandé par la fonction de contrôle.

Un procédé de contrôle connu, mesure l'écart angulaire entre la position réelle de la colonne de direction et une position théorique, pour calculer par un système de régulation du type PID ou RST par exemple, le couple de consigne que la motorisation doit délivrer pour parvenir à la position angulaire de la colonne de direction qu'il a prévue.

Cependant, le conducteur peut vouloir reprendre la main en appliquant notamment un effort contraire sur le volant, s'il désire notamment diriger lui-même le véhicule en imposant une direction différente de celle que cherche à atteindre la fonction de contrôle automatique de la direction.

Dans ce cas, l'effort appliqué sur le volant s'opposant au couple généré par la motorisation, l'écart angulaire entre la position réelle de la colonne de direction et la position demandée par la fonction augmente, et l'asservissement tend à générer un couple plus important pour arriver d'autant mieux à atteindre la position qu'il a calculé.

Si le conducteur lâche alors brutalement le volant, on obtient un couple de rappel de ce volant généré par la motorisation, qui est d'autant plus important que l'écart angulaire était grand. Le volant part avec une vitesse élevée, dans la plage de la dynamique donnée par le système d'asservissement et la motorisation, qui est désagréable, et peut être gênant ou même dangereux.

US 2002 016657, EP 1 864 889, EP 1 346 901 divulgue le préambule de la revendication 1.

La présente invention a notamment pour but d'éviter ces inconvénients de la technique antérieure, et d'apporter une solution simple et efficace permettant de réduire la discontinuité entre une régulation automatique du braquage des roues directrices, et une intervention du conducteur qui la contrarie.

Elle propose à cet effet un procédé de contrôle selon la revendication 1.

Un avantage de ce procédé de contrôle est qu'en cas d'intervention du conducteur sur le volant qui contrarie l'action de la motorisation, entraînant un écart croissant entre l'angle volant de consigne et la position réelle de ce volant, et si le conducteur relâche brutalement le volant, celui-ci repart avec une vitesse régulée qui est limitée à la valeur prédéfinie pour réaliser en douceur un raccordement ramenant la position réelle vers la position de consigne, quelque soit l'écart entre ces deux valeurs.

De plus le procédé de contrôle selon l'invention peut comporter une ou plusieurs des caractéristiques suivantes, qui peuvent être combinées entre elles.

En particulier, le procédé de contrôle peut réaliser les opérations suivantes :

- il établit d'abord un angle volant de consigne permettant au système de direction d'atteindre son objectif de position, qui est comparé à l'angle volant mesuré par un capteur du système de direction, pour calculer la vitesse volant de consigne ; et
- cette vitesse volant de consigne est ensuite comparée à la vitesse volant mesurée, pour réguler la vitesse réelle du volant en calculant un couple additionnel demandé à la motorisation du boîtier de direction, qui corrige cette vitesse réelle mesurée.

Avantageusement, le procédé de contrôle met en oeuvre un système de régulation du type proportionnel / dérivé, pour calculer la fonction de transfert de la régulation donnant le couple additionnel.

Le procédé de contrôle peut calculer la fonction de transfert de la régulation de la manière suivante, P et D étant des constantes :

$$\text{Treg} = P \,(\text{Av cons} - \text{Av mes}) + D \,(\text{Avp cons} - \text{Avp mes}) \,;$$

et calculer la valeur prédéfinie de saturation de la cible de la manière suivante :

$$\text{Avp cible} = P/D \,(\text{Av cons} - \text{Av mes}) + \text{Avp cons}.$$

L'invention a aussi pour objet un système de direction pour un véhicule automobile, comportant une fonction de contrôle automatique de cette direction qui est mise en oeuvre par un procédé de contrôle comprenant l'une quelconque des caractéristiques précédentes.

L'invention a de plus pour objet un véhicule automobile comprenant un système de direction comportant une fonction de contrôle automatique de cette direction, qui est mise en oeuvre par un procédé de contrôle comprenant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :

- la figure 1 est un schéma d'un système de direction comprenant le procédé de contrôle selon l'invention ; et
- la figure 2 est un graphique fonctionnel des différentes étapes du procédé de contrôle.

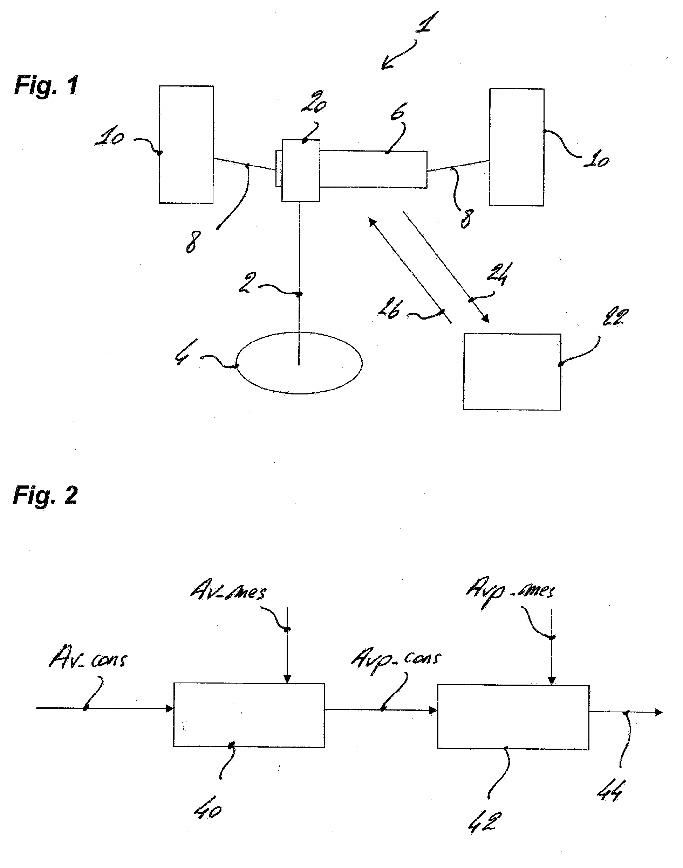

La figure 1 présente un système de direction actif 1 comprenant une colonne de direction 2 reliant un volant 4 fixé à son extrémité supérieure, à une boîtier de direction 6 fixé à son extrémité inférieure.

Le boîtier de direction 6 comporte un mécanisme de transformation du mouvement, comme une crémaillère, qui à partir d'une rotation du volant 4, applique un mouvement transversal à deux biellettes 8 situées à ses extrémités. Les biellettes 8 réalisent un braquage des roues avant 10, en faisant pivoter les moyeux de ces roues autour d'un axe sensiblement vertical.

Le boîtier de direction 6 comporte une motorisation 20, qui peut utiliser notamment une énergie électrique ou hydraulique, pour appliquer un effort sur le mécanisme de ce boîtier entraînant la rotation du volant 4 ainsi que le braquage des roues 10 correspondant.

En particulier, la motorisation 20 peut être celle utilisée par une assistance conventionnelle de la direction du véhicule, qui délivre une part complémentaire de l'effort de braquage, à partir d'une manoeuvre effectuée par le conducteur sur le volant 4.

Le système de direction 1 comporte de plus des fonctions de contrôle automatique gérées par un calculateur de contrôle 22, qui permettent en utilisant la motorisation 20 de réaliser de manière automatique des manoeuvres de cette direction.

Lorsqu'une fonction de contrôle automatique est activée, le calculateur de contrôle 22 reçoit des informations 24 du système de direction 1, en particulier sur la position angulaire du volant 4 délivrée par un capteur, ainsi que d'autres informations sur le fonctionnement du véhicule, comme sa vitesse par exemple, pour en retour réaliser un asservissement 26 de la motorisation 20, et obtenir le braquage des roues 10 désiré.

La figure 2 présente un procédé de contrôle du système de direction 1 pour une fonction de contrôle automatique de la direction, mise en oeuvre par le calculateur de contrôle 22, qui réalise les étapes suivantes.

Le procédé de contrôle établit d'abord un angle volant de consigne Av cons, qui permettra au système de direction 1 d'atteindre son objectif de position. L'angle volant de consigne Av cons est ensuite comparé à l'angle volant Av mes qui est mesuré par le capteur du système de direction 1, pour calculer 40 la vitesse volant de consigne Avp cons.

La vitesse volant de consigne Avp cons est ensuite comparée à la vitesse volant mesurée Avp mes, établie par exemple en dérivant par rapport au temps l'angle volant mesuré Av mes, pour pouvoir réguler la vitesse réelle du volant 4 en calculant 42 un couple additionnel 44 demandé à la motorisation 20 du boîtier de direction 6. Le couple additionnel 44 donne en fonction des inerties et des différentes forces s'appliquant sur la direction, une accélération à l'angle volant pour corriger la vitesse réelle mesurée Avp mes, afin d'obtenir un asservissement de cette vitesse réelle par rapport à la vitesse de consigne Avp cons.

En pratique, le procédé de contrôle effectue les opérations suivantes pour réaliser les étapes présentées ci-dessus, avec un système de régulation du type proportionnel / dérivé (PID) pour calculer la fonction de transfert de la régulation. L'angle Av étant mesuré dans le sens trigonométrique, et la vitesse Avp étant positive dans le sens trigonométrique, on définit les valeurs suivantes :

Av mes = angle volant mesuré

Av cons = angle volant de consigne
Avp mes = vitesse volant mesurée (dérivée de angle volant mesuré)
Avp cons = vitesse volant de consigne
Avp cible = vitesse volant de saturation

L'erreur angulaire de position volant ΔAv est la suivante :

$$\Delta Av = Av\ cons - Av\ mes$$

La fonction de transfert Treg donnant le couple de régulation peut s'écrire alors, P et D étant des constantes :

$$Treg = P\ (Av\ cons - Av\ mes) + D\ (Avp\ cons - Avp\ mes)$$

On veut obtenir une cible pour la vitesse volant de consigne Avp cible, telle que :

$$Treg = D\ (Avp\ cible - Avp\ mes)$$

On obtient alors :

$$D\ (Avp\ cible - Avp\ mes) = P\ (Av\ cons - Av\ mes) + D\ (Avp\ cons - Avp\ mes)$$

Qui peut s'écrire aussi :

$$Avp\ cible = P/D\ (Av\ cons - Av\ mes) + Avp\ cons$$

On sature alors la vitesse cible de volant Avp cible à une valeur acceptable, donnant pour le conducteur une vitesse maximale du volant qui assure à la fois le confort et la sécurité, pour raccorder la position du volant lors de son relâchement brutal par le conducteur, avec la position de consigne.

On peut ainsi avec ce type raccordement de position, assurer une certaine continuité acceptable de la fonction, ce qui permet de ne pas désactiver complètement cette fonction lors d'une intervention manuelle. La fonction reprend alors rapidement son cours normal de fonctionnement, une fois que l'intervention du conducteur a pris fin.

## Revendications

1. Procédé de contrôle mis en oeuvre par une fonction de contrôle automatique d'un système de direction (1) d'un véhicule automobile comprenant un volant de direction (4), pour piloter une motorisation (20) qui réalise le braquage des roues (10) dans certaines conditions particulières de fonctionnement de ce véhicule, ce procédé de contrôle calculant un angle volant de consigne (Av cons) pour réaliser un asservissement en couple de la motorisation (20) et calculant de plus une consigne de vitesse de rotation du volant (Avp cons), qui est saturée à une valeur prédéfinie (Avp cible), **caractérisé en ce que** la valeur prédéfinie de saturation (Avp cible) est calculée pour assurer le confort en cas de relâchement brutal du volant après une intervention du conducteur sur ce volant (4), qui contrarie l'action de la motorisation pendant le fonctionnement de la fonction de contrôle automatique, quel que soit l'écart généré par le conducteur.

2. Procédé de contrôle selon la revendication 1, **caractérisé en ce qu'**il réalise les opérations suivantes :

   - il établit d'abord un angle volant de consigne (Av cons) permettant au système de direction (1) d'atteindre son objectif de position, qui est comparé à l'angle volant (Av mes) mesuré par un capteur du système de direction (1), pour calculer (40) la vitesse volant de consigne (Avp cons) ; et
   - cette vitesse volant de consigne (Avp cons) est ensuite comparée à la vitesse volant mesurée (Avp mes), pour réguler la vitesse réelle du volant (4) en calculant (42) un couple additionnel (44) demandé à la motorisation (20) du boîtier de direction (6), qui corrige cette vitesse réelle mesurée (Avp mes).

**3.** Procédé de contrôle selon la revendication 2, **caractérisé en ce qu'**il met en oeuvre un système de régulation du type proportionnel / dérivé (PID), pour calculer la fonction de transfert de la régulation donnant le couple additionnel (44).

**4.** Procédé de contrôle selon la revendication 3, **caractérisé en ce qu'**il calcule la fonction de transfert de la régulation de la manière suivante, P et D étant des constantes :

$$Treg = P\,(Av\ cons - Av\ mes) + D\,(Avp\ cons - Avp\ mes)\ ;$$

et calcule la valeur prédéfinie de saturation de la cible de la manière suivante :

$$Avp\ cible = P/D\,(Av\ cons - Av\ mes) + Avp\ cons.$$

**5.** Système de direction pour un véhicule automobile, comportant une fonction de contrôle automatique de cette direction, **caractérisé en ce que** cette fonction est mise en oeuvre par un procédé de contrôle réalisé selon l'une quelconque des revendications précédentes.

**6.** Véhicule automobile comprenant un système de direction comportant une fonction de contrôle automatique de cette direction, **caractérisé en ce que** cette fonction est mise en oeuvre par un procédé de contrôle réalisé selon l'une quelconque des revendications 1 à 4.

**Patentansprüche**

**1.** Prüfverfahren, das durch eine automatische Prüffunktion eines Lenksystems (1) eines Kraftfahrzeugs eingesetzt wird, umfassend ein Lenkrad (4), um eine Motorisierung (20) zu steuern, die den Einschlag der Räder (10) unter gewissen besonderen Funktionsbedingungen des Fahrzeugs steuert, wobei dieses Prüfverfahren einen Solllenkwinkel (Av cons) berechnet, um eine Drehmomentsteuerung der Motorisierung (20) durchzuführen, und wobei es ferner einen Drehgeschwindigkeitssollwert (Avp cons) berechnet, der auf einem vordefinierten Wert (Avp cible) gesättigt ist, **dadurch gekennzeichnet, dass** der vordefinierte Sättigungswert (Avp cible) berechnet ist, um den Komfort im Falle eines plötzlichen Loslassens des Lenkrades nach einem Eingreifen des Fahrers in dieses Lenkrad (4), das der Wirkung der Motorisierung während des Betriebs der automatischen Prüffunktion entgegenwirkt, unabhängig von dem vom Fahrer erzeugten Abstand zu gewährleisten.

**2.** Prüfverfahren nach Anspruch 1, **dadurch gekennzeichnet, dass** es die folgenden Schritte ausführt:

- es erstellt zuerst einen Solllenkwinkel (Av cons), der es dem Lenksystem (1) ermöglicht, sein Positionsziel zu erreichen, der mit dem Lenkwinkel (Av mes) verglichen wird, der von einem Sensor des Lenksystems (1) gemessen wird, um die Solllenkgeschwindigkeit (Avp cons) zu berechnen (40); und
- dies Solllenkgeschwindigkeit (Avp cons) wird sodann mit der gemessenen Lenkgeschwindigkeit (Avp mes) verglichen, um die tatsächliche Geschwindigkeit des Lenkrades (4) zu regulieren, wobei ein zusätzliches Drehmoment (44) berechnet (42) wird, das für die Motorisierung (20) des Lenkgehäuses (6) gefordert wird, das diese tatsächliche gemessene Geschwindigkeit (Avp mes) korrigiert.

**3.** Prüfverfahren nach Anspruch 2, **dadurch gekennzeichnet, dass** es ein Regelungssystem proportionalen/abgeleiteten Typs (PID) einsetzt, um die Übertragungsfunktion der Regelung, die das zusätzliche Drehmoment (44) ergibt, zu berechnen.

**4.** Prüfverfahren nach Anspruch 3, **dadurch gekennzeichnet, dass** es die Übertragungsfunktion der Regelung folgendermaßen berechnet, wobei P und D Konstanten sind:

```
Treg = P(Av cons - Av mes) + D(Avp cons - Avp mes);
```

und den vordefinierten Sättigungswert des Ziels folgendermaßen berechnet:

$$Avp\ cible\ =\ P/D(Av\ cons\ -\ Av\ mes)\ +\ Avp\ cons.$$

**5.** Lenksystem für ein Kraftfahrzeug, umfassend eine automatische Prüffunktion dieser Lenkung, **dadurch gekennzeichnet, dass** diese Funktion durch ein Prüfverfahren eingesetzt wird, das nach einem der vorhergehenden Ansprüche durchgeführt wird.

**6.** Kraftfahrzeug, umfassend ein Lenksystem, umfassend eine automatische Prüffunktion dieser Lenkung, **dadurch gekennzeichnet, dass** diese Funktion durch ein Prüfverfahren eingesetzt wird, das nach einem der Ansprüche 1 bis 4 durchgeführt wird.

**Claims**

**1.** A checking method implemented by a function that automatically checks a steering system (1) of a motor vehicle comprising a steering wheel (4) to operate a powered system (20) that turns the wheels (10) under certain specific conditions of operation of this vehicle, this checking method calculating a reference steering wheel angle (Av cons) to provide torque control of the power system (20), and additionally calculating a steering wheel rate of turn reference (Avp cons) which is saturated at a predefined value (Avp target), **characterized in that** the predefined saturation value (Avp target) is calculated to ensure comfort in the case of a sudden release of the steering wheel after an intervention by the driver on this steering wheel (4), which opposes the action of the power system during the functioning of the automatic check function, irrespective of the difference generated by the driver.

**2.** The checking method according to Claim 1, **characterized in that** it carries out the following operations:

- it firstly establishes a reference steering wheel angle (AV cons) permitting the steering system (1) to achieve its position objective, which is compared to the steering wheel angle (Av mes) measured by a sensor of the steering system (1) to calculate (40) the steering wheel speed reference (Avp cons); and
- this steering wheel speed reference (Avp cons) is then compared to the measured steering wheel speed (Avp mes) to regulate the actual speed of the steering wheel (4) by calculating (42) an additional torque (44) requested from the power system (20) of the steering box (6), which corrects this measured actual speed (Avp mes).

**3.** The checking method according to Claim 2, **characterized in that** it implements a regulation system of the proportional/derived type (PID) to calculate the regulation transfer function providing the additional torque (44).

**4.** The checking method according to Claim 3, **characterized in that** it calculates the regulation transfer function in the following manner, P and D being constants:

$$Treg\ =\ P\ (Av\ cons\ -\ Av\ mes)\ +\ D\ (Avp\ cons\ -\ Avp\ mes);$$

and calculates the predefined saturation value of the target in the following manner:

$$Avp\ target\ =\ P/D\ (Av\ cons\ -\ Av\ mes)\ +\ Avp\ cons.$$

**5.** A steering system for a motor vehicle, comprising an automatic checking function of this steering, **characterized in that** this function is implemented by a checking method realized according to any one of the preceding claims.

**6.** A motor vehicle including a steering system comprising an automatic checking function of this steering, **characterized in that** this function is implemented by a checking method realized according to any one of Claims 1 to 4.

**Fig. 1**

1

10

20

6

10

8

8

2

4

26

24

22

**Fig. 2**

Av_mes

Avp_mes

Av_cons

Avp_cons

40

42

44

**EP 2 648 964 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2002016657 A
- EP 1864889 A
- EP 1346901 A